# FASCICULE DE BREVET EUROPEEN

(11) **EP 0 819 281 B1**
(45) Date de publication et mention de la délivrance du brevet: **23.12.1998**
(21) Numéro de dépôt: 96910997.4
(22) Date de dépôt: 28.03.1996
(51) Int. Cl.: G06F 19/00

(54) **SYSTEME ELECTRONIQUE DE COMPETITION ET PROCEDE DE MISE EN UVRE**
ELEKTRONISCHES WETTBEWERBSSYSTEM UND VERFAHREN ZUR DURCHFÜHRUNG
ELECTRONIC COMPETITION SYSTEM AND METHOD FOR USING SAME

(30) Priorité: 06.04.1995 FR 9504116
(43) Date de publication de la demande: 21.01.1998
(73) Titulaire: Benkel, Gérard, 92140 Clamart (FR); Levasseur, Jacques, 95500 Le Thillay (FR)
(72) Inventeur: Benkel, Gérard, 92140 Clamart (FR); Levasseur, Jacques, 95500 Le Thillay (FR)
(74) Mandataire: Ballot, Paul Denis Jacques
(86) Numéro de dépôt international: FR9600474
(87) Numéro de publication internationale: WO9631831

(56) Documents cités:
- EP-A- 0 368 458
- EP-A- 0 404 381
- WO-A-92/02916
- WO-A-93/16776
- DE-U- 9 114 929
- GB-A- 2 164 301
- SID INTERNATIONAL SYMPOSIUM - DIGEST OF TECHNICAL PAPERS, SEATTLE, MAY 16 - 21, 1993, vol. 24, PART 1, 16 Mai 1993, SOCIETY FOR INFORMATION DISPLAY, pages 749-752, XP000470773 HASELTINE E C: "INVITED ADDRESS: DISPLAYS IN VISUAL SIMULATION"
- AUTOMOTIVE ENGINEERING, vol. 102, no. 9, Septembre 1994, WARRENDALE US, pages 37-40, XP000469064 "Driving simulation at Ford"

## Description

L'invention concerne un système électronique de compétition sportive ou autre, réelle ou simulée, qui se déroule dans un lieu réel ou simulé. Elle concerne, notamment, un système électronique ainsi qu'un procédé pour mettre en oeuvre le système de course entre des pilotes de véhicules réels ou simulés qui se déplacent sur un circuit réel ou simulé ainsi qu'un procédé pour mettre en oeuvre le système.

Il existe des consoles électroniques de simulation du pilotage de véhicules, notamment d'automobiles, qui présentent au pilote, sur un écran, une image d'une automobile se déplaçant sur un circuit ou une partie de circuit visible par le pilote, la vitesse et le changement de direction de l'automobile étant sous le contrôle du pilote qui dispose devant l'écran d'un volant, d'une pédale d'accélérateur, d'une pédale de frein, d'une pédale d'embrayage/débrayage et d'un dispositif de changement de vitesse. Ces différents éléments de conduite d'un véhicule peuvent être remplacés par un levier ou manette de commande, plus connu sous le nom anglo-saxon de "joystick", un clavier alphanumérique, un dispositif manuel de déplacement d'un repère sur un écran appelé "souris", etc ... .

Ces consoles électroniques sont utilisées pour l'entraînement des pilotes de véhicules réels ou pour des jeux électroniques dans lesquels les performances du "pilote" sont appréciées par des notes qui permettent de déterminer un gagnant parmi les concurrents en présence. Dans ces consoles électroniques de jeux, seuls les concurrents en présence, c'est-à-dire utilisant la même console, peuvent concourir, ce qui limite l'intérêt du jeu.

Un but de la présente invention est donc de réaliser un système électronique de course de véhicules et un procédé pour le mettre en oeuvre qui permettent de faire concourir des "pilotes" localisés dans des lieux différents.

De manière plus générale, un autre but de la présente invention est de réaliser un système électronique de compétition sportive ou autre entre des concurrents ou participants qui permette de faire concourir des participants localisés dans des lieux différents ainsi qu'un procédé pour mettre en oeuvre le système. Par ailleurs, dans le cas d'une course dont le tracé correspond à un "grand prix de formule 1", ce qui est le cas actuellement sur les consoles existantes, la durée du jeu est limitée à quelques tours du circuit par concurrent, ce qui est très éloigné des conditions de course réelles où la compétition dure plusieurs heures. Un autre but de la présente invention est donc un système électronique de compétition sportive ou autre et un procédé pour le mettre en oeuvre qui permettent de reproduire toutes les conditions de compétition sportive réelles pour chaque concurrent.

En outre, avec les consoles électroniques actuelles, les concurrents ne concourent pas en temps réel avec les pilotes d'une compétition sportive réelle.

Un autre but de la présente invention est donc un système électronique de compétition sportive ou autre et un procédé de mise en oeuvre qui permettent à des concurrents "occasionnels" ou "amateurs" de concourir en temps réel avec les concurrents "professionnels" de l'épreuve sportive originelle de manière à déterminer un gagnant parmi les concurrents dans les conditions les plus proches de la réalité rencontrée par les concurrents professionnels.

Enfin, les consoles électroniques connues ne permettent pas de reproduire les épreuves sportives réalisées par chacun des concurrents professionnels et ne permettent pas aux concurrents de se mesurer, quand bon leur semble, à ces concurrents professionnels et de s'entraîner en vue des prochaines épreuves sportives.

Un autre but de la présente invention est donc un système électronique de compétition sportive ou autre et un procédé de mise en oeuvre qui permettent aux concurrents de comparer leurs performances à celles des concurrents professionnels et de s'entraîner en vue de les améliorer. L'invention concerne donc un système électronique de compétition sportive ou autre entre des concurrents professionnels se déplaçant dans un milieu réel, en direct, et des concurrents amateurs localisés ailleurs qu'au lieu réel de la compétition et se déplaçant dans le même milieu en représentation virtuelle, le milieu réel comportant des moyens pour déterminer la position et le déplacement des concurrents professionnels dans le milieu réel, caractérisé en ce qu'il comprend :
- un dispositif serveur comprenant des moyens dans lesquels sont enregistrées toutes les informations concernant la compétition réelle telles que l'identification du milieu réel et des concurrents professionnels en compétition, l'environnement extérieur tels que la météorologie, l'état du milieu réel, les instants de départ et d'arrivée de la compétition, les positions des concurrents professionnels durant la compétition,
- au moins un dispositif serveur local qui est connecté d'une part, audit dispositif serveur par des premières voies de communication bidirectionnelles et, d'autre part, à au moins un dispositif terminal associé à un concurrent amateur par des deuxièmes voies de communication bidirectionnelles, ledit dispositif serveur local comprenant des moyens pour, d'une part, recevoir des informations dudit dispositif serveur et les transmettre après traitement ou non, auxdits dispositifs terminaux qui lui sont connectés et pour, d'autre part, recevoir des informations en provenance des dispositifs terminaux et les transmettre après traitement ou non audit dispositif serveur, et caractérisé, en outre, en ce que :
- chaque dispositif terminal comprend des moyens pour, d'une part, recevoir et traiter les informations reçues du dispositif serveur local auquel il est connecté et, d'autre part, traiter les performances du concurrent amateur associé au dispositif terminal durant la compétition et transmettre les informations correspondantes audit dispositif serveur local.

L'invention concerne également un procédé de mise en oeuvre du système décrit ci-dessus qui comprend les étapes suivantes :
- détermination en temps réel des positions des concurrents professionnels se déplaçant dans le milieu réel et de leurs performances au cours de la compétition,
- détermination en temps réel des positions des concurrents amateurs se déplaçant dans le même milieu en représentation virtuelle et de leurs performances au cours de la compétition,
- lancement et arrêt simultanés de la compétition des concurrents professionnels et de celle des concurrents amateurs, et
- comparaison des performances des concurrents amateurs en fin de compétition de manière à déterminer un premier classement entre les concurrents amateurs et un deuxième classement entre les concurrents amateurs et les concurrents professionnels.

D'autres buts, objets et caractéristiques de la présente invention apparaîtront à la lecture de la description suivante d'un exemple particulier de réalisation de l'invention, ladite description étant faite en relation avec le dessin joint dans lequel la figure unique est un schéma fonctionnel du système selon la présente invention.

Un système électronique de compétition entre des participants ou concurrents professionnels se déplaçant dans un milieu réel et des concurrents amateurs se déplaçant dans le même milieu en représentation virtuelle sera décrit dans le cadre de véhicules automobiles terrestres et, notamment, d'une compétition automobile dite de "Formule 1". Mais il est clair que le système est applicable à tous les types de véhicules : bateaux, avions, motos, ..., et à tous les types de circuits du genre boucle à parcourir un nombre déterminé de fois ou du genre rallye.

Le système selon l'invention est également applicable à tous les types de compétition, sportive ou non, humaine ou animale.

Le système électronique selon l'invention comprend un dispositif serveur circuit 21 qui reçoit les informations de position ou de passage des véhicules pilotés par des concurrents professionnels et circulant sur un circuit 19 par l'intermédiaire d'un calculateur 38 et de voies de communication unidirectionnelles 20 et 40. Ce dispositif serveur circuit 21 est connecté à des dispositifs serveurs locaux 22, 23 et 24 par l'intermédiaire, respectivement, de voies de communication bidirectionnelles 25, 26 et 27. Chaque dispositif serveur local 22, 23 ou 24 est connecté à des dispositifs terminaux 28, 29 et 30 par l'intermédiaire, respectivement, de voies de communication bidirectionnelles 31, 32 et 33. Chaque dispositif terminal 28, 29 ou 30 est manipulé par un pilote ou concurrent amateur de la course et est représenté par les figurines 34, 35 et 36 montrant sous la référence 36 un opérateur devant un ordinateur avec écran, clavier et poste de pilotage 43, 44. Les flèches bidirectionnelles 40, 41 et 42 indiquent les liaisons avec le système selon l'invention.

Le circuit 19 peut être tout circuit de "Formule 1" participant au championnat du monde de course automobile ou tout autre circuit.

Afin de connaître la position des véhicules sur ce circuit, ce dernier est équipé, par exemple, de trois détecteurs de passage de véhicules D1, D2 et D3 qui divisent le circuit en trois secteurs S1, S2 et S3. Ces détecteurs D1, D2, et D3 sont prévus pour détecter le passage de chaque véhicule et le reconnaître, par exemple, par l'intermédiaire d'un code qui est affecté à chaque véhicule et qui est émis par ce dernier en permanence. Ces informations de passage de véhicule et de reconnaissance des véhicules sont traitées, soit par le calculateur 38 dédié et affecté au circuit et qui fait partie de l'équipement du circuit, soit par le dispositif serveur circuit 21 qui fait partie du système électronique de course selon l'invention. Le dispositif serveur circuit 21 est représenté par une figurine 37 montrant un opérateur devant un ordinateur avec écran et clavier, la flèche bidirectionnelle 39 indiquant les liaisons.

Le calculateur 38 et/ou le dispositif serveur circuit 21 peuvent mettre en oeuvre des logiciels qui déterminent, à chaque instant, la position des véhicules sur chaque section S1, S2 et S3 à partir des instants de passage devant ou sur les détecteurs D1, D2 et D3 et en fonction d'une vitesse moyenne calculée sur ce secteur lors des précédents tours. Ces positions instantanées sont transmises par le dispositif serveur circuit 21, par exemple, aux dispositifs terminaux 28, 29 et 30 par l'intermédiaire de la voie de communication 26, du dispositif serveur local 23 et des voies de communication 31, 32 et 33.

Les dispositifs terminaux 28, 29 et 30 ont des logiciels qui permettent de visualiser sur leur écran, la boucle du circuit et de placer les véhicules en course, réels ou virtuels, sur le circuit visualisé. Cette visualisation peut apparaître de différentes manières et l'une d'entre elles est de faire défiler le paysage du circuit tel que vu par le pilote du véhicule réel ou virtuel. Cette manière de visualiser est actuellement mise en oeuvre dans les consoles de jeux électroniques ou dans les systèmes de simulation en vue de l'apprentissage du pilotage d'un avion, d'un hélicoptère, etc, ... .

Chaque dispositif terminal 28, 29 ou 30 aura suffisamment de capacité mémoire et sera suffisamment rapide pour pouvoir effectuer non seulement la visualisation d'un circuit de "Formule 1" mais aussi de plusieurs circuits différents, par exemple tous ceux du championnat du monde des pilotes de "Formule 1". Cependant, si la capacité mémoire est insuffisante, il peut être fait appel à des disquettes, cartouches ou disques compacts, par exemple un par circuit, dont le contenu est enregistré dans la mémoire permanente au moment opportun.

Chaque dispositif terminal 28, 29 ou 30 est équipé d'une console de pilotage comprenant par exemple un volant, une pédale d'accélérateur, une pédale de frein, une pédale de débrayage et d'un changement de vitesse. Ces différents éléments de la console de pilotage peuvent être remplacés par une manette de direction 43 associée à des boutons de réglage 44 qui permettent de réaliser les autres fonctions de changement de direction et de freinage. La console de pilotage 35 est connectée au dispositif terminal par un câble électrique 41 et les signaux électriques transmis par le câble sont analysés et traités par un logiciel approprié, du genre de celui utilisé dans une console de jeux électroniques, pour présenter au pilote local sa position sur le circuit telle que vue du poste de pilotage d'un véhicule réel de la course avec les sensations correspondantes, notamment la vitesse de défilement du paysage en fonction de la position de la pédale d'accélérateur ou de celle du frein.

Chaque dispositif terminal met en oeuvre d'autres logiciels pour calculer, enregistrer et afficher la vitesse du véhicule virtuel piloté par l'intermédiaire de la console, la durée du tour de circuit en cours, celle des précédents tours et celle depuis le départ de la course, etc ... . Il met aussi en oeuvre d'autres logiciels pour traiter les informations qui sont reçues du dispositif serveur circuit 21 et du dispositif serveur local 23 et celles qui doivent être transmises en retour au dispositif serveur circuit et au dispositif serveur local.

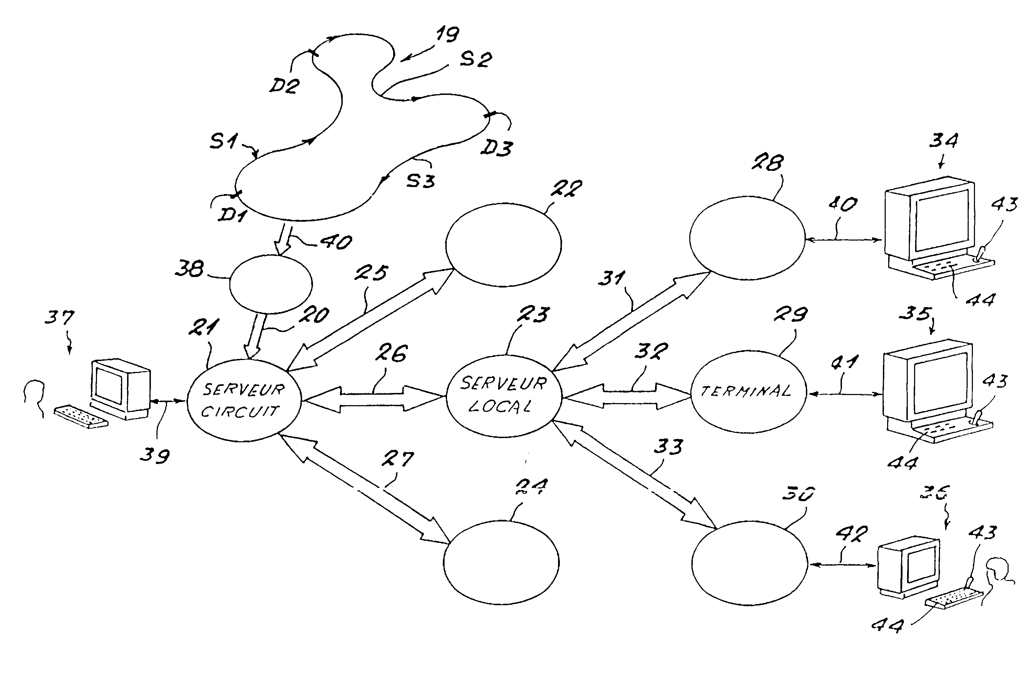

Les tableaux I, II, III et IV indiquent les flux d'informations qui circulent entre les différentes parties du système décrites en relation avec la figure 1 ainsi que l'action, en matière d'informations, des intervenants que sont l'opérateur 37 du dispositif serveur circuit 21 et les pilotes 34, 35, 36 des véhicules virtuels.

Le tableau I présente, sous forme schématique, l'ensemble des trois tableaux suivants II, III et IV.

Le tableau II est réservé aux flux d'informations relatifs à l'initialisation du système, notamment des dispositifs terminaux 28, 29 et 30, avant le départ de la course.

Le tableau III est réservé aux flux d'informations relatifs à la course elle-même.

Le tableau IV est réservé aux flux d'informations relatifs au dépouillement des résultats de la course, c'est-à-dire au classement des concurrents.

Dans les tableaux II, III et IV, les références identiques à celles de la figure 1 désignent les mêmes éléments. Les lettres majuscules A à L qui sont inscrites dans le coin supérieur droit de chaque rectangle associé au dispositif serveur circuit, au dispositif serveur local et au dispositif terminal, ont pour but d'indiquer simultanément la référence du rectangle correspondant, l'ordre chronologique de l'opération concernée et le contenu du traitement effectué par le dispositif concerné. Les chiffres 1 à 10 inscrits dans des cercles indiquent l'ordre des opérations de transmission des informations entre les différents rectangles A à L.

Ainsi, dans le tableau II, la première opération A consiste pour l'opérateur 37 à entrer dans le dispositif serveur circuit 21 les informations suivantes :
- la météorologie initiale,
- l'identification du circuit réel,
- l'identification des véhicules réels en compétition,
- les noms des pilotes associés aux véhicules réels.

Le dispositif serveur circuit 21 effectue ensuite l'opération 1 qui consiste à :
- émettre les informations de A vers B pour les transmettre aux dispositifs serveurs locaux 22, 23 et 24.

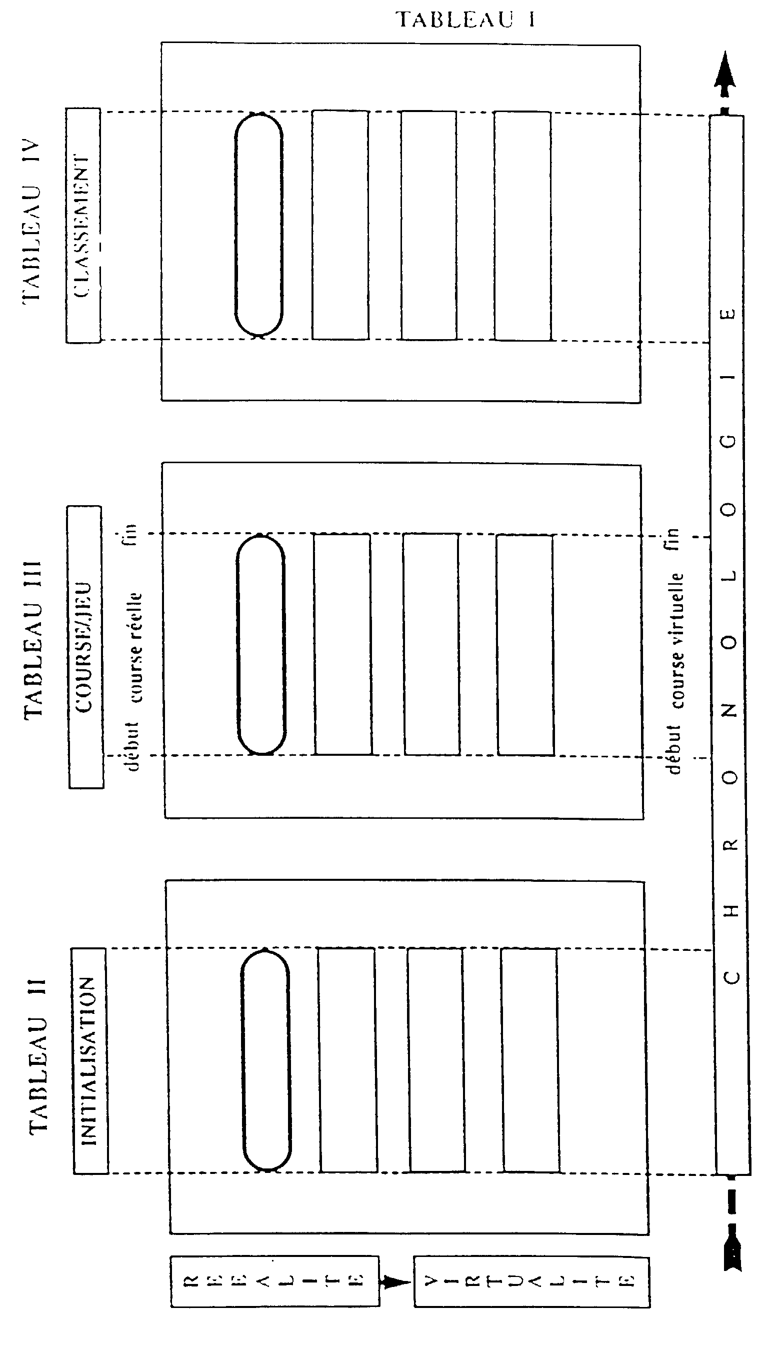

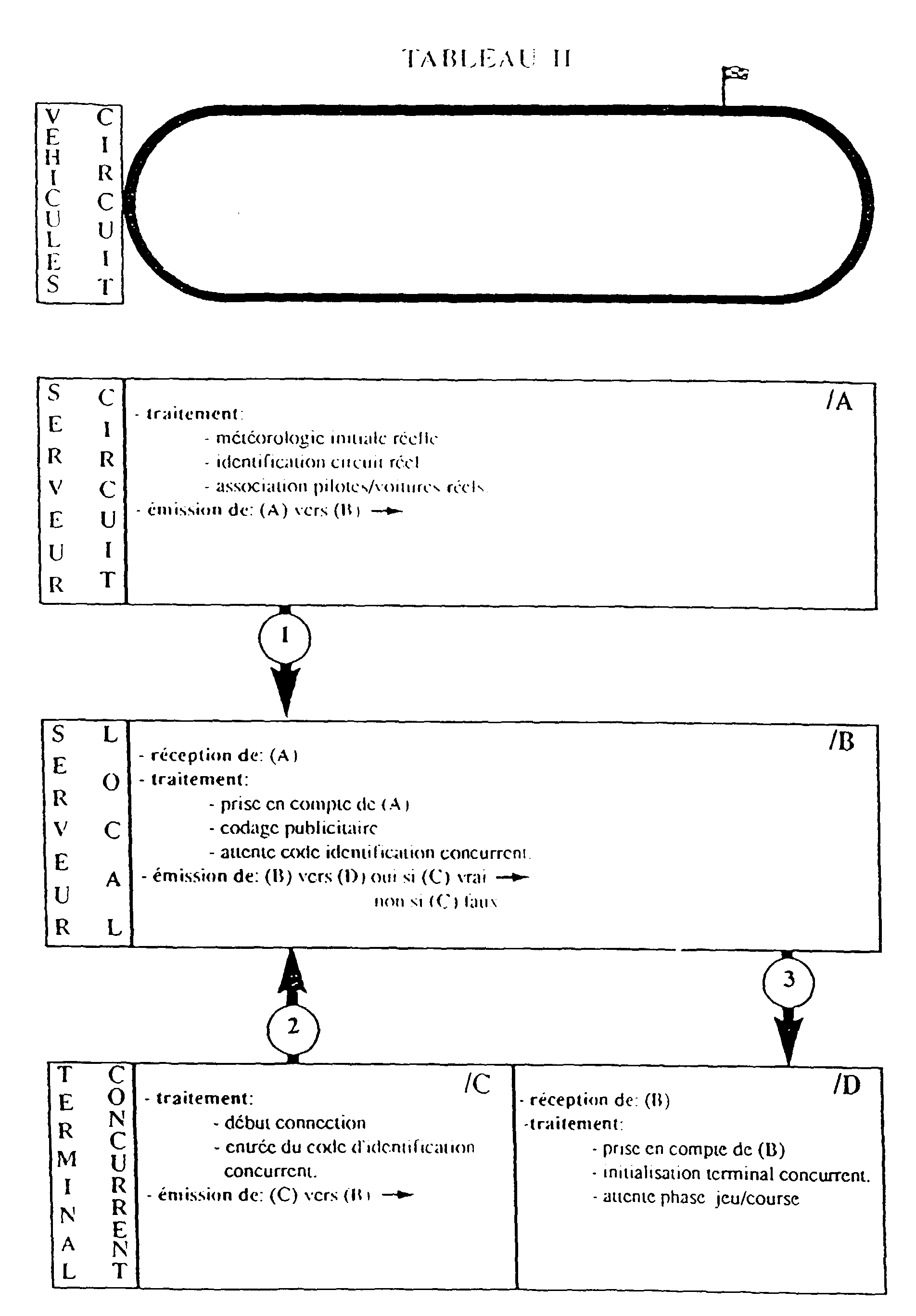

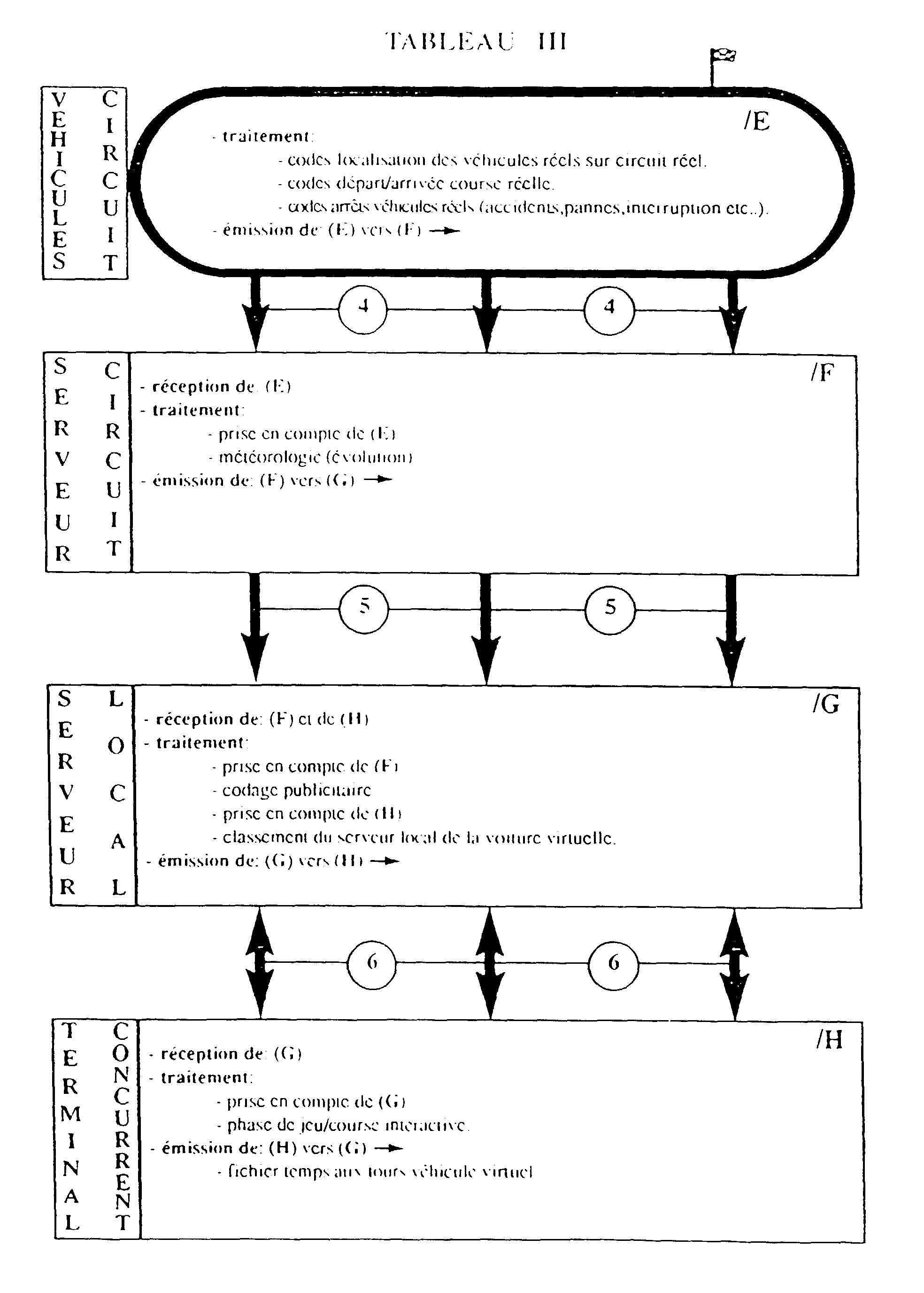

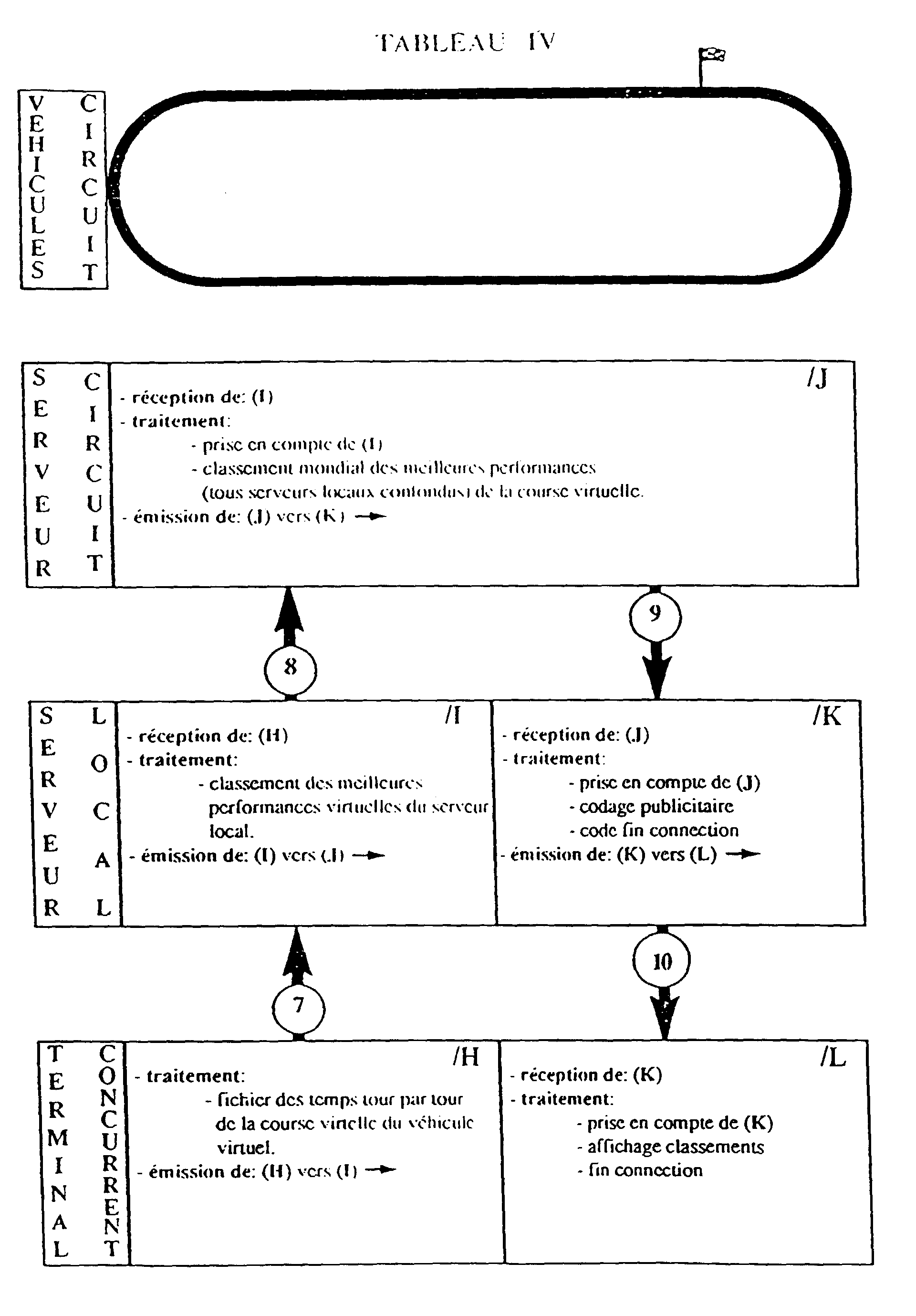

Le dispositif serveur local 22, 23 ou 24 effectue la deuxième opération B qui consiste à :
- recevoir les informations A transmises par l'opération 1,
- les traiter pour :
- prendre en compte les informations A,
- introduire le codage publicitaire,
- attendre le code d'identification du terminal concurrent.

La troisième opération, identifiée par C, est effectuée au terminal concurrent 28, 29 ou 30 et comprend les étapes :
- de connecter le terminal,
- d'entrer le code d'identification du concurrent,
- d'émettre le code identification du concurrent de C vers B par la transmission 2.

Le dispositif serveur local 22, 23 ou 24 réalise alors l'opération qui consiste à :
- recevoir le code d'identification du terminal,
- contrôler le code d'identification du concurrent,
- et transmettre aux dispositifs terminaux 28, 29 et 30 des informations d'initialisation si le code d'identification est reconnu.

La transmission de ces informations est effectuée par l'opération 3 et les informations transmises correspondent à (A + B).

Le dispositif terminal 28, 29 ou 30 réalise alors l'opération D qui consiste à :
- recevoir les informations (A + B),
- traiter les informations reçues pour :
   - les prendre en compte,
   - initialiser le terminal concurrent,
   - attendre le départ de la course réelle.

Le tableau III est relatif à la course réelle elle-même qui commence par l'opération E consistant, par l'intermédiaire du calculateur 38 et des liaisons 20 et 40, à :
- obtenir par traitement informatique les informations suivantes :
   - les codes de localisation des véhicules réels sur le circuit réel,
   - les codes de départ/arrivée de la course réelle,
   - les codes des arrêts des véhicules réels par suite de pannes, d'accidents, d'interruptions, etc ...,.
- émettre les codes définis ci-dessus au serveur circuit 21 par l'opération 4.

Ces informations E sont reçues par le dispositif serveur circuit 21 qui effectue l'opération F consistant à :
- recevoir les informations E,
- les traiter pour :
   - les prendre en compte,
   - introduire des codes relatifs, notamment à l'évolution de la météorologie sur le circuit réel,
- émettre l'ensemble des informations aux dispositifs serveurs locaux 22, 23 et 24 par l'opération 5.

Chaque dispositif serveur local 22, 23 ou 24 réalise l'opération G consistant à :
- recevoir les informations F,
- les traiter pour :
   - les prendre en compte,
   - y introduire un codage publicitaire.
- émettre l'ensemble des informations aux dispositifs terminaux des concurrents 28, 29 et 30, en ce qui concerne le dispositif serveur local 23, par l'opération 6.

Chaque dispositif terminal effectue l'opération H consistant à :
- recevoir les informations G,
- les traiter pour :
   - les prendre en compte,
   - commencer la phase de course du véhicule virtuel,
- mesurer la durée de chaque tour de circuit du véhicule virtuel,
- créer un fichier temps pour chaque véhicule virtuel,
- émettre à chaque tour les informations du fichier temps au dispositif serveur local associé par l'opération 6.

Dans le dispositif serveur local, ces fichiers des temps par tour sont traités par des étapes supplémentaires de l'opération G qui consistent à :
- recevoir les fichiers de temps par tour provenant de l'opération H,
- les traiter pour :
   - les prendre en compte,
   - classer les véhicules virtuels du dispositif serveur local selon les temps par tour.

L'information de la fin de la course réelle arrête la course des véhicules virtuels et les opérations suivantes du TABLEAU IV sont relatives au classement des concurrents de la course.

Au fur et à mesure du déroulement de la course, l'opération H crée un fichier complet des temps tour par tour de la course virtuelle du véhicule virtuel du concurrent.

A la fin de la course, ces fichiers complets sont transmis au dispositif serveur local par l'opération 7 pour y être traités par l'opération I consistant à :
- recevoir les fichiers complets de la course des concurrents,
- les traiter pour classer les performances des concurrents associés au dispositif serveur local,
- émettre les informations du classement vers le serveur circuit par l'opération 8.

Dans le dispositif serveur circuit, l'opération J consiste à :
- recevoir les informations de classement de chacun des dispositifs serveurs locaux,
- les traiter pour :
   - les prendre en compte,
   - déterminer un classement général des concurrents de la course virtuelle selon leurs performances,
- émettre les informations du classement général des concurrents vers les dispositifs serveurs locaux par l'opération 9.

Dans le dispositif serveur local, l'opération K consiste à :
- recevoir les informations du classement général,
- à les traiter pour :
   - les prendre en compte,
   - y introduire un codage publicitaire,
   - y introduire un code de fin de connexion,
- à émettre les informations du classement général et des codages supplémentaires vers les dispositifs terminaux par l'opération 10.

Dans le dispositif terminal concurrent, l'opération L consiste à :
- recevoir les informations obtenues par l'opération K,
- à les traiter pour :
   - les prendre en compte,
   - afficher le classement général,
   - arrêter la connexion.

La description du système selon l'invention, qui a été faite en relation avec la figure 1 et les tableaux I, II, III et IV, correspond à une réalisation relativement simple, notamment en ce qui concerne les informations à traiter, leur volume et leur traitement.

Ceci est particulièrement vrai au niveau des dispositifs terminaux qui peuvent être adaptés à réaliser des séances d'essai et d'entraînement de course, hors championnat, avec des réglages variables quant aux pneus, au moteur, aux freins, au changement de vitesse, etc ... .

Dans le cas de tels systèmes très évolués, l'éventail du choix des programmes utilisables par le concurrent amateur devant son dispositif terminal est très large et les tableaux V, VI et VII indiquent ce que peut être cet éventail en termes de "menus informatiques" apparaissant sur l'écran du dispositif terminal.

Le tableau V indique les différents menus informatiques nouveaux qui sont à la disposition du concurrent dans le cas d'une course virtuelle réalisée selon le système et procédé de l'invention tandis que les tableaux VI et VII indiquent les différents menus informatiques classiques qui sont à la disposition du concurrent dans le cadre d'une course ou d'un jeu dit "normal", c'est-à-dire sans relation avec une course réelle en direct.

Sur ces tableaux V, VI et VII, les nombres 51 à 74 (sauf 70) désignent chacun un rectangle qui définit un menu informatique tandis que les lettres M à Y désignent chacun un rectangle qui , pour le rectangle 54, correspond aux menus principaux de la course virtuelle selon l'invention et qui, pour le rectangle 55, correspond aux menus principaux d'une course normale. La première opération pour mettre en oeuvre le terminal concurrent 28, 29 ou 30 est celle du chargement de la course ou du jeu (étape 51) à l'aide de disquettes, cartouches ou disques compacts ou de tout autre support informatique. La deuxième opération est celle du choix de la langue de communication (étape 52). Lorsque ce choix

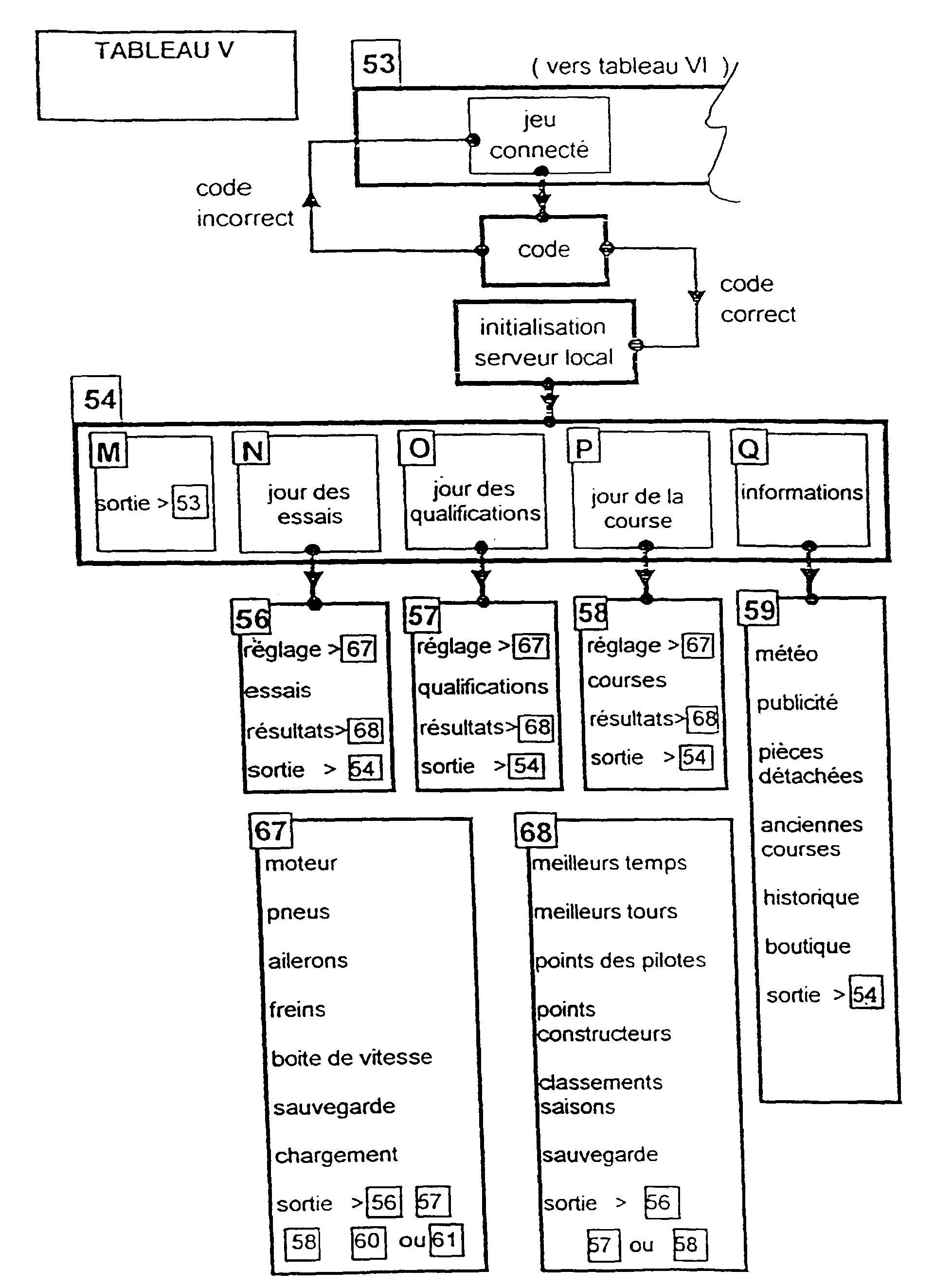

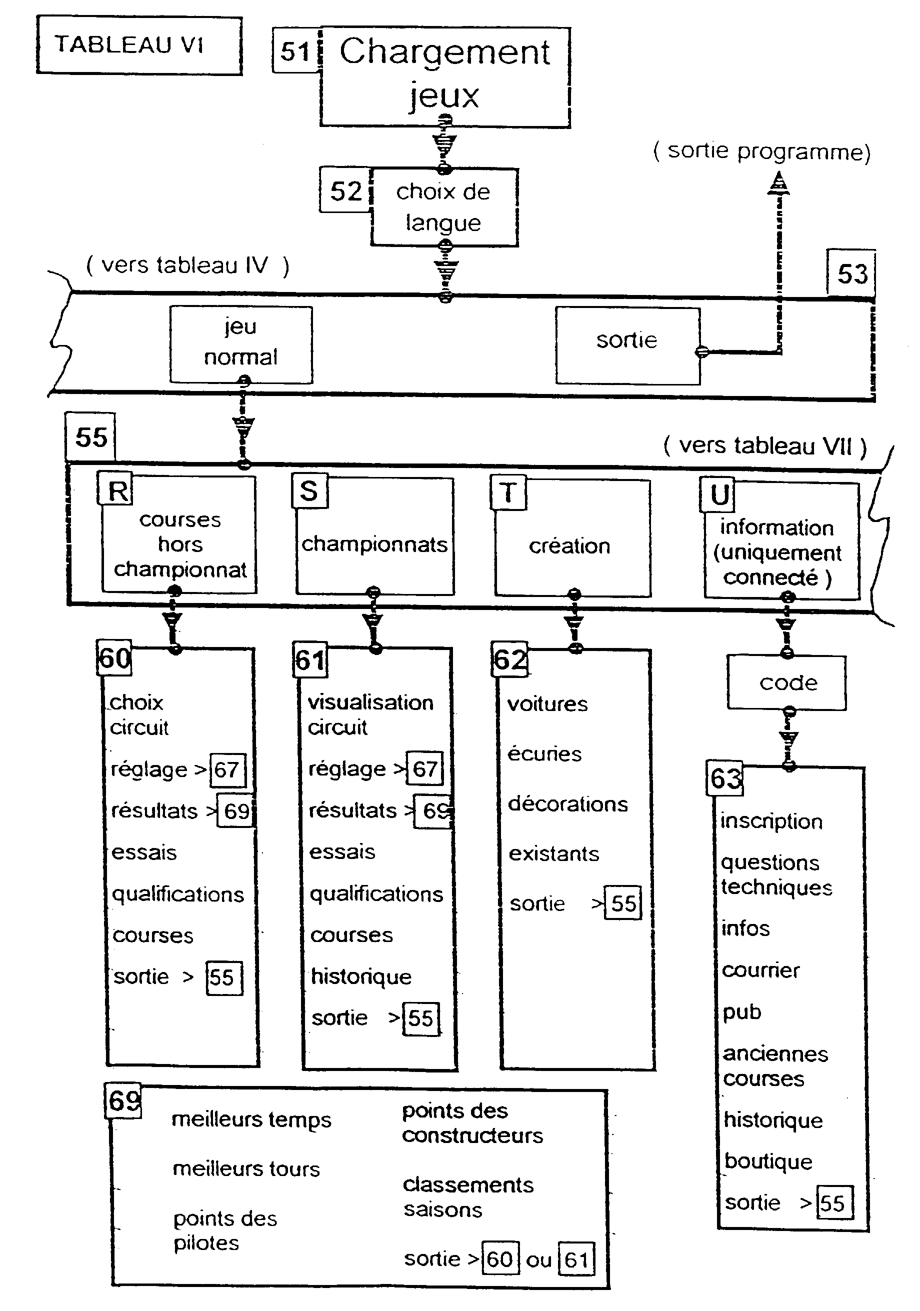

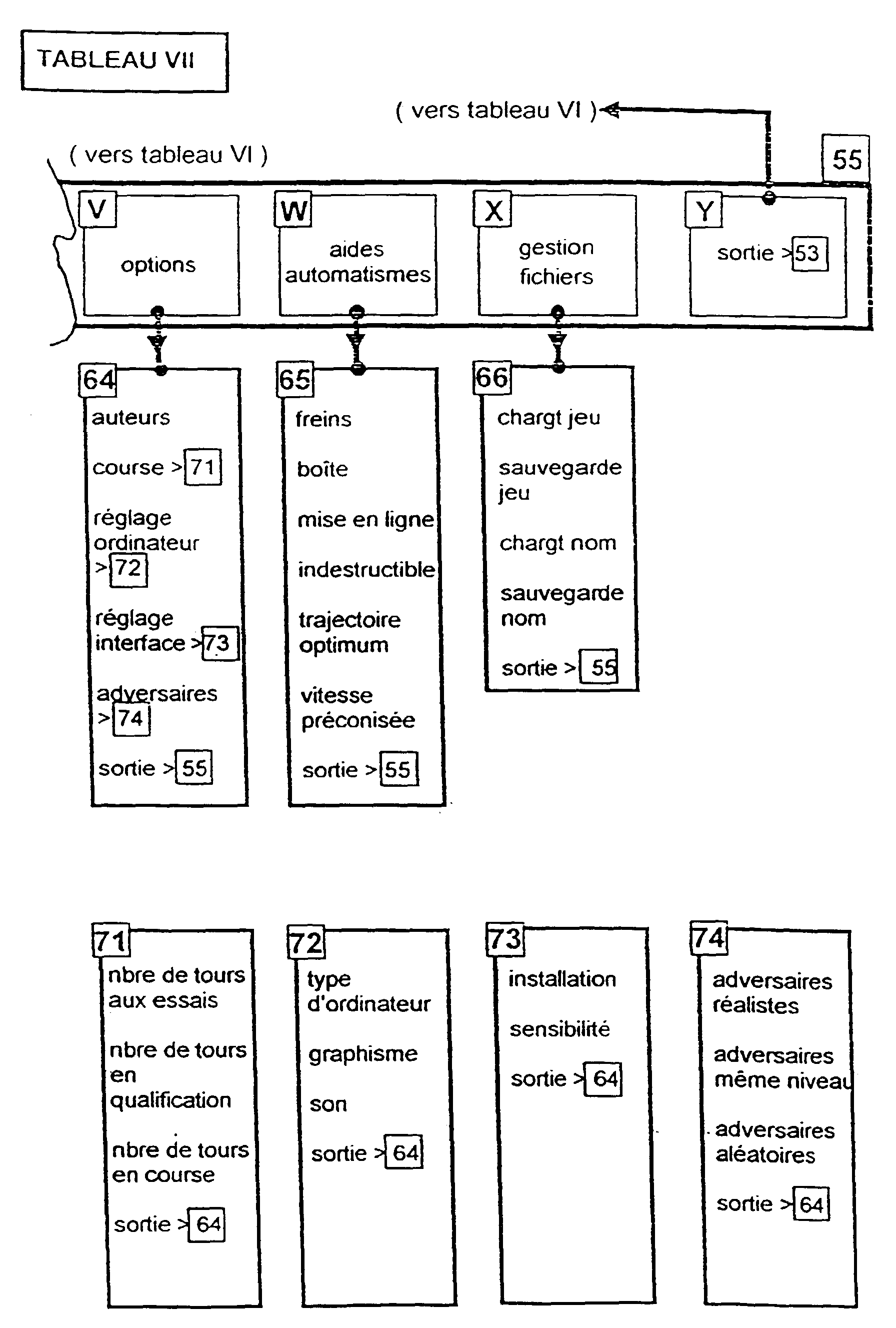

est effectué, la troisième opération (étape 53) consiste à choisir une option parmi trois :
- soit le jeu dit "connecté", c'est-à-dire la course virtuelle en direct (tableau V),
- soit le jeu dit "normal", c'est-à-dire la course sans liaison avec la course réelle en direct (tableaux VI et VII),
- soit la sortie du programme, cette option existant dans tous les menus informatiques.

En cas de choix du jeu connecté (tableau V), le concurrent doit entrer son code d'identification au dispositif serveur local (tableau II) qui, s'il est exact lui permet d'accéder à l'étape 54 des menus M, N, O, P et Q.

Le menu M permet de revenir à 1 'étape 53.

Le menu N est celui du jour des essais et comprend les options du menu de l'étape 56 qui permettent :
- d'effectuer les réglages selon les options du menu de l'étape 67,
- de réaliser les essais,
- d'en connaître les résultats selon les options du menu de l'étape 68,
- d'en sortir pour retourner à l'étape 54.

Le menu O est celui du jour des qualifications et comprend les options du menu de l'étape 57 qui permettent :
- d'effectuer les réglages selon les options du menu de l'étape 67,
- de réaliser les qualifications,
- d'en connaitre les résultats selon les options du menu de l'étape 68,
- d'en sortir pour retourner à l'étape 54.

Le menu P est celui du jour de la course et comprend les options du menu de l'étape 58 qui permettent :
- d'effectuer les réglages selon les options du menu de l'étape 67,
- de réaliser la course,
- d'en connaître les résultats selon les options du menu de l'étape 68,
- d'en sortir pour retourner à l'étape 54.

Le menu Q est celui qui permet d'obtenir certaines informations pour la course selon les options du menu de l'étape 59 qui permettent :
- d'obtenir la météorologie,
- de faire apparaître la publicité,
- de connaître la liste des pièces détachées disponibles,
- d'obtenir certaines informations sur les anciennes courses sur le même circuit,
- d'obtenir certaines informations historiques sur le circuit de la course considérée,
- d'obtenir la liste des accessoires disponibles,
- d'en sortir pour retourner à l'étape 54.

Les réglages du menu de l'étape 67 concernent le moteur, les pneus, les ailerons, les freins, la boîte de vitesses, la sauvegarde des réglages, le chargement des réglages. L'option sortie permet de retourner aux étapes 56, 57, 58 du tableau V ou aux étapes 60 et 61 du tableau VI.

Les résultats du menu de l'étape 68 concernent les meilleurs temps, les meilleurs tours, les points des pilotes, les points des constructeurs, les classements des différentes saisons, la sauvegarde des résultats et la sortie vers les étapes 56, 57 et 58 du tableau V. Dans le cas du choix du jeu normal, c'est-à-dire hors course réelle, l'étape 55 permet le choix parmi les menus R à Y des tableaux VI et VII, chaque menu R à X permettant les options des menus des étapes respectives 60 à 66, le menu Y correspondant au retour à l'étape 53.

Ces menus 60 à 66 conduisent éventuellement à des "sous-menus" 69 et 71 à 74 des tableaux VI et VII.

Ces options R à Y et ces menus 60 à 74 (sauf 70) sont suffisamment explicités sur les tableaux VI et VII pour ne pas être décrits plus en détails.

Le système électronique de course qui vient d'être décrit conduit au procédé qui comprend les étapes suivantes :
- détermination en temps réel des positions des véhicules réels pilotés par les concurrents professionnels, sur le circuit 19 et de leurs performances au cours de la course,
- détermination en temps réel des positions des véhicules virtuels pilotés par les concurrents amateurs sur le même circuit 19 en représentation virtuelle et de leurs performances au cours de la course,
- lancement et arrêt simultanés de la course des véhicules réels et de celle des véhicules virtuels, et
- comparaison des performances des véhicules virtuels de fin de course de manière à déterminer un premier classement entre les concurrents amateurs des véhicules virtuels et un deuxième classement entre les concurrents amateurs des véhicules virtuels et les pilotes professionnels des véhicules réels.

Les différentes opérations énumérées ci-dessus correspondent à une course de championnat en temps réel. Cependant, le système permet, au niveau de chaque dispositif terminal, de réaliser des courses hors championnat sur un circuit choisi et dans des conditions de réglage du véhicule et de météorologie définies par le concurrent. Le procédé comprend alors, en outre, les opérations suivantes :
- enregistrement dans une mémoire permanente de chaque dispositif terminal 28, 29 et 30 de toutes les informations de course correspondant à au moins un circuit 19,
- choix par le pilote amateur du véhicule virtuel des conditions de fonctionnement de son véhicule et de la course pour le circuit considéré,
- lancement par le pilote amateur du véhicule virtuel de la course pour le circuit considéré,
- détermination et enregistrement des performances du véhicule virtuel au cours de la course sur le circuit considéré, et
- comparaison des performances du véhicule virtuel au cours de la course à celles du même véhicule virtuel pour le même circuit dans des conditions identiques ou non de manière à évaluer l'évolution des performances.

Ces opérations additionnelles permettent au pilote du véhicule virtuel de s'entraîner seul. S'il souhaite rivaliser avec les pilotes des véhicules réels pour une course déterminée d'un championnat, le procédé comprend, en outre, les opérations suivantes :
- enregistrement des informations des performances des véhicules réels qui ont participé à une course sur le circuit considéré, et
- comparaison des performances du véhicule virtuel à celles du véhicule réel pour la même course pour déterminer un classement du véhicule virtuel par rapport aux véhicules réels.

## Revendications

1. Système électronique de compétition entre des concurrents professionnels se déplaçant dans un milieu réel et des concurrents amateurs localisés ailleurs qu'au lieu réel de la compétition et se déplaçant dans le même milieu en représentation virtuelle, le milieu réel comportant des moyens (D1, D2, D3, 40, 38) pour déterminer la position des concurrents professionnels dans le milieu réel, caractérisé en ce qu'il comprend :
- un dispositif serveur (21) comprenant des moyens dans lesquels sont enregistrées toutes les informations concernant la compétition réelle et, notamment, l'identification du milieu réel, des concurrents professionnels en compétition, l'environnement extérieur tels que la météorologie, l'état du milieu réel, les instants de départ et d'arrivée de la compétition, les positions des concurrents professionnels durant la compétition,
- au moins un dispositif serveur local (22, 23 ou 24) qui est connecté d'une part, audit dispositif serveur (21) par des voies de communication bidirectionnelles (25, 26, 27) et, d'autre part, à au moins un dispositif terminal (28, 29, 30) associé à un concurrent amateur par des deuxièmes voies de communication bidirectionnelles (31, 32, 33), ledit dispositif serveur local comprenant des moyens pour, d'une part, recevoir des informations dudit dispositif serveur (21) et les transmettre, après traitement ou non, auxdits dispositifs terminaux (28, 29, 30) qui lui sont connectés et pour, d'autre part, recevoir des informations en provenance des dispositifs terminaux (28, 29, 30) et les transmettre après traitement ou non audit dispositif serveur (21), et caractérisé, en outre, en ce que :
- chaque dispositif terminal (28, 29, 30) comprend des moyens pour, d'une part, recevoir et traiter les informations reçues du dispositif serveur local (22, 23, 24) auquel il est connecté et, d'autre part, traiter les performances du concurrent amateur associé au dispositif terminal, durant la compétition et transmettre les informations correspondantes audit dispositif serveur local.

2. Système selon la revendication 1, caractérisé en ce que le dispositif serveur (21) comprend, en outre, des moyens pour déterminer un classement des performances des concurrents amateurs en provenance des dispositifs serveurs locaux (22, 23, 24) et transmettre le classement auxdits dispositifs terminaux (28, 29, 30) via lesdits dispositifs serveurs locaux.

3. Système selon la revendication 2, caractérisé en ce que chaque dispositif serveur local (22, 23, 24) comprend des moyens pour classer les meilleures performances des concurrents amateurs associés aux dispositifs terminaux qui lui sont connectés et pour les transmettre audit dispositif serveur (39).

4. Système selon l'une des revendications précédentes 1, 2 ou 3, caractérisé en ce que chaque dispositif terminal (28, 29, 30) comprend des moyens simulant le concurrent amateur qui lui est associé, des moyens pour présenter à l'écran du dispositif terminal l'image d'au moins un milieu réel de compétition (19) tel que vu par un concurrent professionnel et des moyens pour traiter les performances du concurrent amateur et les présenter à l'écran du dispositif terminal.

5. Système selon la revendication 4, caractérisé en ce que chaque dispositif terminal (28, 29, 30) comprend des moyens pour mesurer les performances du concurrent amateur qui lui est associé au cours de la compétition et réaliser un fichier des performances de la compétition effectuée, fichier qui est transmis au dispositif serveur local (22, 23, 24).

6. Système selon l'une quelconque des revendications précédentes, caractérisé en ce que chaque dispositif terminal (28, 29, 30) comprend des moyens pour enregistrer et présenter plusieurs compétitions ainsi que les performances des concurrents professionnels, pour modifier les conditions de la compétition et pour permettre au concurrent amateur de s'entraîner dans une compétition de son choix en l'absence de toute compétition réelle.

7. Système selon l'une des revendications précédentes, caractérisé en ce que ledit dispositif serveur local comprend des moyens pour transmettre aux dispositifs terminaux des informations étrangères à la compétition telles que de la publicité.

8. Procédé de mise en oeuvre du système électronique de compétition selon l'une des revendications précédentes caractérisé par les opérations suivantes :
- détermination en temps réel des positions des concurrents professionnels se déplaçant dans le milieu réel (19) et de leurs performances au cours de la compétition,
- détermination en temps réel des positions des concurrents amateurs se déplaçant dans le même milieu en représentation virtuelle et de leurs performances au cours de la compétition,
- lancement et arrêt simultanés de la compétition des concurrents professionnels et de celle des concurrents amateurs, et
- comparaison des performances des concurrents amateurs en fin de compétition de manière à déterminer un premier classement entre les concurrents amateurs et un deuxième classement entre les concurrents amateurs et les concurrents professionnels.

9. Procédé selon la revendication 8, caractérisé en ce qu'il comprend, en outre, les opérations suivantes :
- enregistrement dans une mémoire permanente de chaque dispositif terminal (28, 29, 30) de toutes les informations de compétition correspondant à au moins une compétition (19),
- choix par le concurrent amateur des conditions de la compétition,
- lancement par le concurrent amateur de la compétition choisie,
- détermination et enregistrement des performances du concurrent amateur au cours de la compétition choisie, et
- comparaison des performances du concurrent amateur au cours de la compétition à celles du même concurrent amateur pour la même compétition dans des conditions identiques ou non de manière à évaluer l'évolution des performances.

10. Procédé selon la revendication 9, caractérisé en ce qu'il comprend, en outre, les opérations suivantes :
- enregistrement des informations des performances des concurrents professionnels qui ont participé à une compétition, et
- comparaison des performances du concurrent amateur à celles du concurrent professionnel pour la même compétition pour déterminer un classement du concurrent amateur par rapport aux concurrents professionnels.

## Patentansprüche

1. Elektronisches System für den Wettkampf zwischen professionellen Konkurrenten, die sich in einer realen Umgebung bewegen, und Amateur-Konkurrenten, die sich außerhalb des realen Wettkampfortes befinden und sich in der gleichen, virtuell dargestellten Umgebung bewegen, wobei die reale Umgebung Mittel (D1, D2, D3, 40, 38) zum Bestimmen der Position der professionellen Konkurrenten in der realen Umgebung aufweist, **gekennzeichnet** durch eine Servervorrichtung (21) mit Mitteln, in denen alle Informationen in bezug auf den realen Wettkampf und insbesondere die Identifikation der realen Umgebung, die professionellen Konkurrenten in dem Wettkampf, externe Bedingungen, wie das Wetter, der Zustand der realen Umgebung, der Zeitpunkt des Starts und des Endes des Wettkampfs, die Position der professionellen Konkurrenten des Wettkampfs, gespeichert sind,
wenigstens eine lokale Servervorrichtung (22, 23 oder 24), die einerseits mit der Servervorrichtung (21) über bidirektionale Übertragungswege (25, 26, 27) verbunden ist und andererseits mit einer Terminalvorrichtung (28, 29, 30) verbunden ist, die einem Amateur-Konkurrenten über zweite bidirektionale Übertragungswege (31, 32, 33) zugeordnet ist, wobei die lokale Servervorrichtung Mittel aufweist, um einerseits Informationen von der Servervorrichtung (21) zu empfangen und diese, nach Verarbeitung oder ohne Verarbeitung, zu den Terminalvorrichtungen (28, 29, 30) zu senden, welche mit ihr verbunden sind, und um andererseits Informationen zu empfangen, die von den Terminalvorrichtungen (28, 29, 30) stammen, und diese, nach Verarbeitung oder ohne Verarbeitung, zu der Servervorrichtung (21) zu senden,
und die ferner dadurch **gekennzeichnet** ist, daß
jede Terminalvorrichtung (28, 29, 30) Mittel aufweist, um einerseits die von der lokalen Servervorrichtung (22, 23, 24), mit der sie verbunden sind, Informationen zu empfangen und zu verarbeiten und andererseits die Leistungen des Amateur-Konkurrenten, der zu der Terminalvorrichtung gehört, während des Wettkampfes zu verarbeiten und die entsprechenden Informationen zu der lokalen Servervorrichtung zu senden.

2. System nach Anspruch 1, dadurch **gekennzeichnet**, daß die Servervorrichtung (21) Mittel zum Bestimmen einer Klassifikation der Leistungen der Amateur-Konkurrenten, die von den lokalen Servervorrichtungen (22, 23, 24) kommen, und zum Übertragen der Klassifikation zu den Terminalvorrichtungen (28, 29, 30) über die lokalen Servervorrichtungen aufweist.

3. System nach Anspruch 2, dadurch **gekennzeichnet,** daß jede lokale Servervorrichtung (22, 23, 24) Mittel zum Klassifizieren der besten Leistungen der Amateur-Konkurrenten, die zu den Terminalvorrichtungen gehören, welche mit Ihnen verbunden sind, und zum Übertragen derselben zu der Servervorrichtung (39) aufweisen.

4. System nach einem der vorangehenden Ansprüche 1, 2 oder 3, dadurch **gekennzeichnet**, daß jede Terminalvorrichtung (28, 29, 30) Mittel zum Simulieren des Amateur-Konkurrenten, der ihr zugeordnet ist, Mittel zum Darstellen des Bildes wenigstens einer realen Wettkampfumgebung (19), so wie sie von einem professionellen Konkurrenten gesehen wird, und Mittel zum Verarbeiten der Leistungen des Amateur-Konkurrenten und zum Darstellen derselben auf dem Bildschirm der Terminalvorrichtung, aufweist.

5. System nach Anspruch 4, dadurch **gekennzeichnet,** daß jede Terminalvorrichtung (28, 29, 30) Mittel zum Messen der Leistungen des Amateur-Konkurrenten, der ihr zugeordnet ist, im Laufe des Wettkampf und zum Herstellen einer Datei der Leistungen des durchgeführten Wettkampfes aufweist, wobei die Datei zu der lokalen Servervorrichtung (22, 23, 24) gesendet wird.

6. System nach einem der vorangehenden Ansprüche, dadurch **gekennzeichnet,** daß jede Terminalvorrichtung (28, 29, 30) Mittel zum Speichern und Darstellen mehrerer Wettkämpfe sowie der Leistungen der professionellen Konkurrenten aufweist, um die Zustände des Wettkampfes zu modifizieren und um einem Amateur-Konkurrenten zu ermöglichen, sich in einem Wettkampf seiner Wahl trainieren zu lassen, wenn es keinen realen Wettkampf gibt.

7. System nach einem der vorangehenden Ansprüche, dadurch **gekennzeichnet**, daß die lokale Severvorrichtung Mittel zum Übertragen von Informationen, die nicht zu dem Wettkampf gehören, wie Werbung, zu den Terminalvorrichtungen aufweist.

8. Verfahren zum Betreiben eines elektronischen Wettkampfsystems nach einem der vorangehenden Ansprüche, **gekennzeichnet** durch folgenden Verfahrensschritte:
Ermitteln der Positionen der professionellen Konkurrenten, die sich in der realen Umgebung (19) bewegen, und ihrer Leistungen im Laufe des Wettkampfes in Echtzeit; Ermitteln der Positionen der Amateur-Konkurrenten, während sie sich in der gleichen, virtuell dargestellten Umgebung bewegen, und ihrer Leistungen im Laufe des Wettkampfes in Echtzeit;
gleichzeitiges Starten und Anhalten des Wettkampfes der professionellen Konkurrenten und des Wettkampfes der Amateur-Konkurrenten; und
Vergleichen der Leistungen der Amateur-Konkurrenten am Ende des Wettkampfes, um eine erste Klassifikation zwischen den Amateur-Konkurrenten und eine zweite Klassifikation zwischen den Amateur-Konkurrenten und den professionellen Konkurrenten zu ermitteln.

9. Verfahren nach Anspruch 8, **gekennzeichnet** durch die folgenden weiteren Verfahrensschritte: Speichern aller Informationen über den Wettkampf, die wenigstens einem Wettkampf (19) entsprechen, in einem Permanentspeicher jeder Terminalvorrichtung (28, 29, 30); Auswählen der Bedingungen des Wettkampfes durch den Amateur-Konkurrenten;
Starten des gewählten Wettkampfes durch den Amateur-Konkurrenten;
Bestimmen und Speichern der Leistungen des Amateur-Konkurrenten im Laufe des gewählten Wettkampfes; und
Vergleichen der Leistungen des Amateur-Konkurrenten im Laufe des Wettkampfes mit denen desselben Amateur-Konkurrenten für denselben Wettkampf unter identischen Bedingungen oder unter anderen Bedingungen, um die Entwicklung der Leistung zu bewerten.

10. Verfahren nach Anspruch 9, **gekennzeichnet** durch die folgenden weiteren Verfahrensschritte: Speichern von Leistungsinformationen der professionellen Konkurrenten, die an einem Wettkampf teilgenommen haben; Vergleichen der Leistungen des Amateur-Konkurrenten mit denen der professionellen Konkurrenten für denselben Wettkampf, um eine Klassifikation des Amateur-Konkurrenten im Verhältnis zu den professionellen Konkurrenten zu ermitteln.

## Claims

1. An electronic system for contests between professional competitors who are moving about in an actual environment, and amateur competitors located elsewhere and not in the actual location of the contest and moving about in the same environment in virtual reality, the actual environment comprising means (D1, D2, D3, 40, 38) to determine the position of the professional competitors in the actual environment, characterized in that it comprises:
- a server device (21) comprising means in which are stored all the data relating to the actual competition and, in particular, the identification of the actual surroundings and of the professional competitors in the contest, outside conditions, such as weather conditions, the state of the actual environment, the starting and finishing moments of the competition, the positions of the professional competitors during the competition,
- at least one local server device (22, 23 or 24) which is connected, on the one hand, to said server device (21) by bidirectional communication links (25, 26, 27) and, on the other hand, to at least one terminal device (28, 29, 30) associated with an amateur competitor by second bidirectional communication links (31, 32, 33), said local server device comprising means for, on the one hand, receiving data from said server device (21) and for transmitting, with or without processing, to said terminal devices (28, 29, 30) connected thereto and for, on the other hand, receiving data sourced from the terminal devices (28, 29, 30) and transmitting, with or without processing, to said server device (21), and characterized, in addition, in that:
- each terminal device (28, 29, 30) comprises means for, on the one hand, receiving and processing the data received from the local server device (22, 23, 24) to which it is connected and, on the other hand, processing the performance of the amateur competitor associated with the terminal device in the course of the contest and transmitting the corresponding information to said local server device.

2. A system according to claim 1, characterized in that the server device (21) additionally comprises means to determine a positioning of the performance of the amateur competitors sourced from the local server devices (22, 23, 24) and to transmit the position to said terminal devices (28, 29, 30) via said local server devices.

3. A system according to claim 2, characterized in that each local server device (22, 23, 24) comprises means to grade the best performance of the amateur competitors associated with the terminal devices which are connected to said competitors and to transmit this to said server device (39).

4. A system according to one of the preceding claims 1, 2 or 3, characterized in that each terminal device (28, 29, 30) comprises means which simulate the amateur competitor associated therewith, means to display on the screen of the terminal device the picture of at least one actual contest environment (19) as seen by the professional competitor, and means to process the performance of the amateur competitor and to display this on the screen of the terminal device.

5. A system according to claim 4, characterized in that each terminal device (28, 29, 30) comprises means to assess the performance of the amateur competitor associated therewith during the race and to create a file for the performance of the contest which has taken place, the file being transmitted to the local server device (22, 23, 24).

6. A system according to any one of the preceding claims, characterized in that each terminal device (28, 29, 30) comprises means to store and present various contests and the performance of the professional competitors, to modify the conditions of the contest and to permit the amateur competitor to train in a contest of his choice, in the absence of any actual competition.

7. A system according to one of the preceding claims, characterized in that said local server device comprises means to transmit to the terminal devices any information which is unrelated to the competition, such as advertising.

8. A method of applying the electronic contest system according to the preceding claims, characterized by the following operations:
- real-time evaluation of the position of the professional competitors moving about in an actual environment (19) and their performance during the contest,
- real-time evaluation of the position of the amateur competitors moving about in the same environment in virtual reality and of their performance during the contest,
- simultaneous start and finish of the contest by the professional competitors and by the amateur competitors, and
- comparison of the performance of the amateur competitors at the end of the contest, in a manner so as to determine a first position among the amateur competitors and a second position among the amateur competitors and the professional competitors.

9. A method according to claim 8, characterized in that it additionally involves the following operations:
- storing in a permanent memory of each terminal device (28, 29, 30) of all the contest data corresponding to at least one contest (19),
- selection by the amateur competitor of the conditions of the contest,
- start by the amateur competitor of the contest selected,
- evaluating and storing the performance of the amateur competitor during the contest selected, and
- comparison of the performance of the amateur competitor during the contest to the performance of the same amateur competitor for the same contest under identical or different conditions, in a manner so as to evaluate the progress in performance.

10. A method according to claim 9, characterized in that it additionally involves the following steps:
- storing the data of the performance of the professional competitors who have participated in a contest, and
- comparing the performance of the amateur competitor to the performance of the professional competitor for the same contest, in order to evaluate a position of the amateur competitor relative to the professional competitors.
